# EUROPÄISCHE PATENTSCHRIFT

(11) **EP 2 463 153 B1**
(45) Veröffentlichungstag und Bekanntmachung des Hinweises auf die Patenterteilung: **15.04.2015**
(21) Anmeldenummer: 10194440.3
(22) Anmeldetag: 10.12.2010
(51) Int. Cl.: B60Q 1/26, B60R 1/12

(54) **Beleuchtungseinheit**
Lighting unit
Unité d'éclairage

(43) Veröffentlichungstag der Anmeldung: 13.06.2012
(60) Teilanmeldung: 14166901.0
(73) Patentinhaber: SMR Patents S.à.r.l., 1653 Luxembourg (LU)
(72) Erfinder: Schmierer, Arne, 73230 Kirchheim (DE)
(74) Vertreter: Weber-Bruls, Dorothée

(56) Entgegenhaltungen:
- EP-A2- 1 914 118
- EP-A2- 2 258 977
- WO-A2-2010/055178
- DE-A1-102005 027 512
- US-A1- 2004 114 384
- US-A1- 2004 190 303
- US-A1- 2010 177 523

## Beschreibung

Es wird eine unitäre Beleuchtungseinheit für den Außenspiegel eines Fahrzeugs vorgeschlagen, wobei ein Teil der Beleuchtungseinheit einem Blinker entspricht während ein anderer Teil der Beleuchtung als Warnanzeige für Assistenzsysteme dient.

### Stand der Technik

Konventionelle Außenspiegel haben ein Design, das es erlaubt, den Spiegelkopf gegenüber dem Spiegelfuß von Hand oder motorisch in Fahrtrichtung des Fahrzeuges nach hinten abgeklappt werden kann. Zudem lässt sich der Spiegelglasträger im Spiegelkopf in der Regel vom Inneren des Fahrzeuges aus einstellen. Dadurch ist eine einwandfreie Sicht des Fahrers gewährleistet, wodurch eine hohe Verkehrssicherheit erreicht wird. Viele Außenspiegel weisen eine Blinkleuchte auf, die an der in Fahrtrichtung vorderen Seite des Spiegelgehäuses vorgesehen ist. Für neben oder hinter dem Außenspiegel befindliche Verkehrsteilnehmer ist die Blinkleuchte jedoch nicht oder nur ungenügend erkennbar. Daher werden Zusatz-LEDs verwendet, die entgegen der Fahrtrichtung abstrahlen und am äußersten Rand des Außenspiegels im Blinker integriert sind.

Nach den ECE Regeln soll ein Zusatzblinklicht im Außenspiegel einen Bereich beginnend bei 5° von der Fahrzeuglängsachse bis zu 60° zur Fahrzeuglängsachse in Fahrtgegenrichtung ausleuchten.

Aus dem Stand der Technik ist eine Vielzahl an Lösungen für Blinker im Außenspiegel bekannt. Dabei werden Blinkermodule in das Gehäuse eines Außenspiegels integriert. Diese Blinkermodule enthalten je nach Design Lichtwellenleiter, Reflektoren, Leiterplatten, Linsen und Abdeckscheiben und Leuchtmittel. Die Leuchtmittel sind durch die bekannten Vorteile immer mehr LEDs. Eine Ausführungsform ist aus der EP 0858932 bekannt. In dieser Ausführungsform wird ein Blinkermodul gebildet, das einen Lichtleiter aufweist. Der Lichtleiter bildet mit dem Gehäuse eines Außenspiegels eine stetige Kontur aus. Das Licht einer LED wird an einem Ende des Lichtleiters eingekoppelt und über die gesamte Länge transportiert. Die Abstrahlung des Lichtes erfolgt über die gesamte Länge des Lichtleiters je nach Dichte der Auskoppelvorrichtungen und am Ende des Lichtleiters. Es erweist sich, dass diese Lösung für die optimale Ausleuchtung einer Beleuchtungseinrichtung nicht ausreicht. Man erreicht mit der Lösung der fernen Einkopplung von Licht und dem Transport von 5 bis 20 cm nicht die gewünscht Lichtstärke.

Aus der US 7,357,549 ist eine Beleuchtungseinheit bekannt, die Lichtleiterelemente aufweist,
in die mindestens einen LED ragt. In dieser Ausführung wird der Lichtleiter in mehrere Abschnitte unterteilt und weist eine Aussparung entlang seiner Längenausdehnung auf. Durch die Ausnehmung im Lichtleiter wird dieser in seiner Stabilität geschwächt und/oder die äußere stetige Oberfläche des Lichtleiters durch einen Erhebung gestört. Dadurch dass das Lichtleitmaterial optisch klar ist, ist der Lichteinkoppelpunkt von außen sichtbar, was den harmonischen Eindruck des Lichtleiters stört.

Aus WO 2010/055178 A2 ist eine weitere Beleuchungseinheit bekannt. Diese Beleuchtungseinheit ist zweiteilig ausgebildet und erfüllt zwei Lichtfunktionen, wobei eine davon eine Warnanzeige für einen Fahrer ist.

Aus US 2004/0190303 A1 ist ein Fahrzeugaußenspiegel mit einer unitären Beleuchtungseinheit bekannt. Diese Beleuchtungseinheit weist ein Gehäuse und eine Lichtscheibe auf, sie führt eine erste Funktion als Blinker und eine zweite Funktion als Tagfahrlicht aus.

Weiterhin sind aus dem Stand der Technik Lösungen zur Anzeige einer Gefahrensituation bekannt, die an und/oder im Außenspiegel eines Fahrzeugs angebracht sind. Warnanzeigen müssen so angebracht sein, dass sie vom Fahrer des Fahrzeugs wahrgenommen werden, wenn sie aufleuchten. Es bietet sich daher eine Position an der inneren Gehäuseabdeckung des Außenspiegels an.

Hierzu sind Module bekannt, die von einem Assistenzsystem angesteuert werden und in Reaktion auf ein Steuersignal aufleuchten. Ein Beispiel ist die US 7,492,281 , die den Einsatz einer Warnanzeige in der Gehäuseabdeckung aufzeigt. Die Warnanzeige ist als selbstständiges Modul ausgeführt und wird getrennt von weiteren Beleuchtungseinheiten in den Spiegelkopf eingebaut.

Aus der US 2010/0177523 A1 ist ein Fahrzeugaußenspiegel bekannt, bei dem im Inneren eines Spiegelkopfes auf einer einzigen Leiterplatte mehrere Lichtquellen montiert sind, um jeweils über einen Lichtleiter Licht zur Außenseite des Spiegelkopfes zu leiten. Dabei sind im Gehäuse des Spiegelkopfes Lichtleiter in jeweils eigens dafür vorgesehenen Öffnungen angeordnet, die mit den Lichtleitern im Inneren des Spiegelkopfes verbunden sind und unabhängig voneinander im sowie am Gehäuse verlaufen. Eine der Lichtquellen wird über einen Blinkaktuator und eine andere der Lichtquellen über ein Warnsystem angesteuert.

Alle im Stand der Technik bekannten Beleuchtungselemente für unterschiedliche Aufgaben des Außenspiegels sind als einzelne Bauelemente aufgebaut und werden in den dafür vorgesehenen Öffnungen einzeln integriert.

Es ist Aufgabe der Erfindung einen Außenspiegel eines Fahrzeugs mit einem Spiegelkopf, einer den Spiegelkopf abdeckenden Gehäuseabdeckung und einem Beleuchtungsmodul , in dem Licht für mindestens zwei unterschiedliche Funktionen eingespeist und an unterschiedlichen Stellen des Außenspiegels ausgekoppelt wird, zu schaffen, wobei für das Beleuchtungsmodul nur ein Bauteil zur Verwendung kommt, das als Ganzes in das Gehäuse des Außenspiegels eingesetzt wird.

### Beschreibung der Erfindung

Die Aufgabe wird gelöst indem einen Beleuchtungseinheit (10) mit einem Modulgehäuse (12) und einer Lichtscheibe (11) vorgeschlagen wird, die sich entlang der Längsachse eines Fahrzeugaußenspiegels (1) mit einem, den Spiegelkopf (2) abdeckenden Spiegelkopfgehäuseabdeckung erstreckt, wobei die Beleuchtungseinheit (10) eine erste Funktion als Blinker ausführt und Licht in einem ersten Bereich (5) nach Vorgabe der gesetzlichen Regelungen auskoppelt, und die Beleuchtungseinheit mindestens einen zweiten Bereich ausleuchtet, wobei der mindestens zweite Auskoppelbereich (6) näher am Fahrzeug liegt und die Beleuchtungseinheit (10) die Funktion einer für den Fahrer sichtbaren Warnanzeige ausübt.

Die nachfolgenden Figuren und die Beschreibung zeigen Ausführungsformen der Erfindung, die die Erfindung beispielhaft erläutern.
- Fig. 1: zeigt den Stand der Technik
- Fig. 2: und Fig. 3 zeigen eine erste Ausführungsform einer Beleuchtungseinheit in Vorder- und Rückansicht
- Fig. 4: zeigt eine Ausführungsform
- Fig. 5: zeigt eine zweite Ausführungsform
- Fig. 6: zeigt eine weitere Ausführungsform
- Fig. 7: zeigt eine weitere Ausführungsform

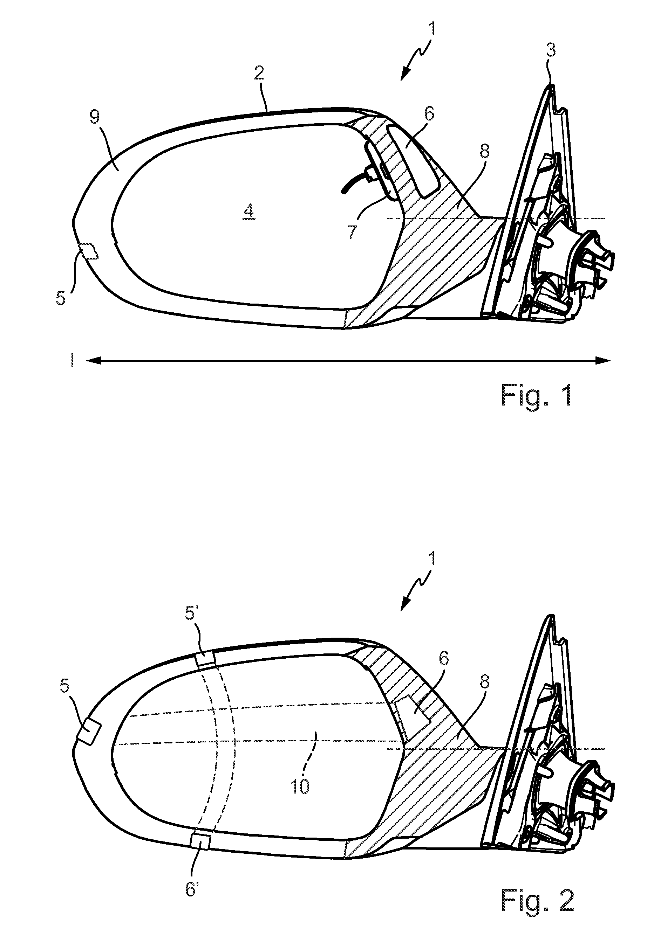

Figur 1 zeigt einen Fahrzeugaußenspiegel 1, der aus einem Spiegelkopf 2 und Spiegelfuß 3 besteht, die gelenkig miteinander verbunden sind. Der gezeigte Fahrzeugaußenspiegel weist einen Rahmen 9 auf, der eine Öffnung 4 für die Installation eines Spiegelglases, einer Glasträgerplatte, eines Glasverstellantriebs sowie weiterer elektrischer oder elektronischer Funktionen umschließt.

Der Spiegelkopf 2 ist mit Gehäuseabdeckungen verschlossen, die ein- oder mehrteilig sein können.

Der Fahrzeugaußenspiegel weist zwei getrennte Beleuchtungseinheiten auf. Die erste Beleuchtungseinheit ist ein Spiegelblinker, dessen Licht an der Auskoppelstelle des Blinkers 5 in einem Winkel von 5° bis 15° abgestrahlt wird. Der Verlauf des Blinkers ist in Figur 1 nicht weitere eingezeichnet, aber das Blinkermodul erstreckt sich entlang der Längsachse I des Fahrzeugspiegels. Die Auskopplung des Lichtes des Blinkers ist dabei nicht nur auf den Auskoppelbereich 5 beschränkt, sondern kann entlang des gesamten Blinkers verlaufen. Die Auskoppelstelle für die Blinkerfunktion liegt am fahrzugabgewandten Rand des Außenspiegels, damit andere Verkehrsteilnehmer den Blinker wahrnehmen können. Weiterhin weist der Fahrzeugaußenspiegel eine Warnanzeige auf, die als Warnanzeigenmodul 7 installiert ist. Das Warnanzeigenmodul 7 weist eine Auskoppelfläche 6 auf, die bündig in die Spiegelkopfgehäuseabdeckung des Außenspiegels integriert ist. Die Auskoppelfläche 6 der Warnanzeige befindet sich vorteilhafterweise im Bereich 8 an der Seite der Spiegelkopfgehäuseabdeckung, die dem Fahrzeug zugewandt ist. Eine solche Anordnung von Beleuchtungseinheiten im Außenspiegel ist im Stand der Technik ausgeführt. Es werden zwei getrennte Beleuchtungsmodule eingesetzt und im Gehäuse des Spiegels installiert. Dafür müssen unterschiedliche Befestigungsmechanismen vorgesehen und die Beleuchtungsmodule getrennt kontaktiert werden. Da der Bauraum im Außenspiegel begrenzt ist, ist das Einsetzen der Beleuchtungsmodule oft ein Problem.

Zudem wird die Anzahl der Varianten des Außenspiegels erhöht. Je nachdem ob ein Blinker, eine Warnanzeige oder beide Beleuchtungseinheiten installiert werden, muss die Spiegelkopfgehäuseabdeckung des Spiegels unterschiedlich gestaltet sein. Die Spiegelkopfgehäuseabdeckung muss je nach installierten Beleuchtungseinheiten Aussparungen aufweisen, die von den Lichtfenstern der jeweiligen Einheiten belegt werden. Die Spiegelabdeckung kann auch gleich ausgeführt sein, ohne dass eine Leuchtfunktion integriert oder aktiviert ist.

Figur 2 zeigt eine erste schematische Ausführungsform der Erfindung. Das erfindungsgemäße Beleuchtungsmodul 10 erstreckt sich entlang der Rückseite der Spiegelkopfgehäuseabdeckung des Außenspiegels in seiner Längsrichtung. Im Bereich 5 ist die Auskoppelstelle des Blinkersignals angedeutet. Im Bereich 6 ist die Auskoppelfläche der Warnanzeige sichtbar, die sich wieder im bevorzugten Bereich 8 der Spiegelkopfgehäuseabdeckung wiederfindet. Blinker als auch Warnanzeige sind in einem einzigen Beleuchtungsmodul 10 untergebracht. Die Auskoppelpunkte der jeweiligen Lichteinheiten hängen stark vom Design des Außenspiegels ab. Als Forderung ist lediglich die gesetzliche Forderung nach Lichtstärke sowie Ausleuchtungswinkel für den Blinker zu erfüllen, sowie eine sinnvolle Anordnung der Warnanzeige, sodass sie vom Fahrer aus sichtbar ist.

Das erfindungsgemäße Beleuchtungsmodul 10 erstreckt sich in der Ausführungsform nahezu horizontal entlang der Spiegellängsachse. Es sind auch Ausführungsformen mit einer anderen Anordnung des Beleuchtungsmoduls denkbar. Dabei erstreckt sich das Beleuchtungsmodul von einem Emissionspunkt 5, der an der unteren Seite des Spiegels bzw. der Spiegelrahmeneinfassung liegt, bis zur Auskoppelfläche der Warnanzeige 6, die sich sinnvollerweise in der oberen Hälfte der Spiegelkopfgehäuseabdeckung befindet. Dabei ist es von Vorteil, wenn sich die Warnanzeige in einem Bereich 8, der sich entlang der Innenseite der Spiegelkopfgehäuseabdeckung befindet, angebracht ist.

In einer alternativen Ausführungsform ist auch ein Verlauf des Beleuchtungsmoduls 10 vertikal denkbar. Die Blinkerfunktion koppelt dann beispielsweise am oberen Rand des Außenspiegels an der Position 5' aus und die Warnfunktion am unteren Rand an der Position 6'.

Der Vorteil des einzigen Beleuchtungsmoduls ist es, dass das Beleuchtungsmodul je nach Ausführungsform des Fahrzeugspiegels im Gehäuse vormontiert werden kann. Es werden Befestigungsmittel benötigt, die das Beleuchtungsmodul aufnehmen und fixieren können. Dabei kommen alle bekannten Möglichkeiten wie Verklipsen, Verkleben, Schweißen zum Einsatz.

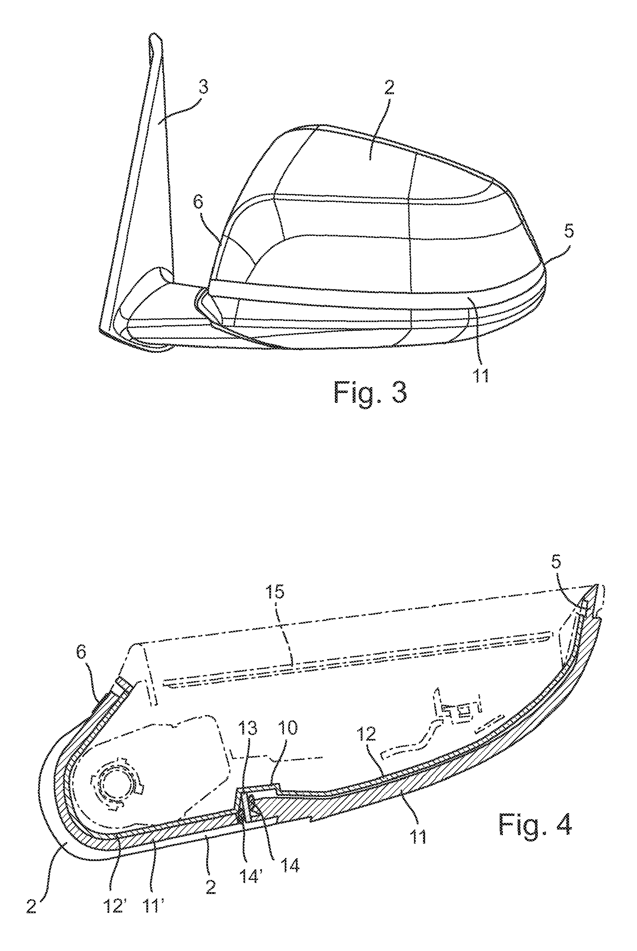

Figur 3 zeigt eine erfindungsgemäße Ausführungsform in der Blinkrichtung gegen die Fahrtrichtung des Fahrzeugs. Die Rückseite des Spiegelkopfes 2 wird dabei von der Spiegelkopfgehäuseabdeckung abgedeckt. Die Spiegelkopfgehäuseabdeckung wird von einem Lichtfenster 11 unterbrochen.

Dieses Lichtfenster erstreckt sich über die gesamte Außenkontur des Außenspiegels in seiner Längsrichtung. An der äußersten Stelle wird das Licht für die Blinkerfunktion im Auskoppelbereich 5 ausgekoppelt. An der inneren fahrzeugseitigen Seite 8 der Spiegelkopfgehäuseabdeckung wird das Licht für die Warnanzeige durch das Auskoppelstelle 6 zur Verfügung gestellt. Für eine solche Ausführungsform, in dem die Beleuchtungsmodul 10 über seine gesamte Erstreckung von außen sichtbar ist, ist ein in der Bauhöhe schmales Lichtfenster 11, wie hier gezeigt, von Vorteil. Die Spiegelkopfgehäuseabdeckung kann dabei eine Aussparung aufweisen, in die das Lichtfenster hineinpasst. Alternativ dazu ist auch ein zwei- oder mehrteiliger Gehäuseaufbau möglich, sodass unterschiedliche Gehäuseteile das Beleuchtungsmodul 10 einfassen. Wie aus Figur 3 auch zu erkennen ist, ist es auf einfache Weise möglich, aus Designgründen Teile des Lichtfensters mit der Spiegelkopfgehäuseabdeckung abzuschatten und nur dedizierte Aussparungen an dafür vorgesehen Bereichen vorzusehen. Dazu werden Gehäuseteile mit dekorativen Aussparungen versehen und das Beleuchtungsmodul erstreckt sich hinter der Spiegelkopfgehäuseabdeckung im Inneren des Außenspiegels. Die Einteiligkeit des Beleuchtungsmoduls bleibt dabei erhalten. Figur 4 zeigt einen Schnitt durch einen Außenrückblickspiegel entlang des Beleuchtungsmoduls 10. In Figur 4 ist ein Querschnitt durch eine Spiegelkopfgehäuseabdeckung des Spiegelkopfes 2 dargestellt, die ein schematisch dargestelltes Spiegelglas umfasst.

Das beispielhafte Beleuchtungsmodul 10 weist zwei Teilbereiche auf, die im Bereich einer Leiterplatte 13 auf einander zulaufen und eventuell zusammenstoßen. Die Lichtfenster 11 und 11' stoßen an diesem Punkt zusammen. Die Lichtfenster 11 und 11' folgen der Außenkontur des Außenspiegels. In der Ausführungsform der Figur 4 sind die Lichtfenster gleichzeitig als Lichtleiter für den Transport des Lichtes von der Einkoppelstelle an der Leiterplatte 13 bis an die Auskoppelstellen entlang der Lichtleiter und am Ende der Auskoppelbereiche 5 und 6 ausgebildet. In die Lichtleiter gleich Lichtfenster wird Licht von LEDs 14, 14', die auf der Leiterplatte 13 montiert sind, eingespeist. Das Licht der LED 14 wird in Reaktion auf die Blinkersteuerung emittiert und folgt dabei dem Lichtleiter 11 bis zum Auskoppelpunkt 5. Das Licht der Warnanzeige wird über die LED 14' emittiert und über den Lichtwellenleiter 11' bis zur Auskoppelfläche 6 geleitet. Die Lichtwellenleiter sind dabei in einem Modulgehäuse 12 der Beleuchtungseinheit 10 eingebaut, das sich über die gesamte Ausdehnung der Lichtfensters 11, 11' erstreckt. Das Modulgehäuse 12 der Beleuchtungseinheit weist Vorrichtung zur Befestigung an der Spiegelkopfgehäuseabdeckung des Außenspiegels auf.

In einer alternativen Ausführungsform werden die Lichtleiter als getrennte Bauteile parallel hinter der dem Lichtfenster 11 angeordnet. Das Beleuchtungsmodul weist dann ein getrenntes Lichtfenster auf, das parallel zu dem Lichtleiter installiert ist.

In der Ausführungsform nach Figur 4 ist der Lichtwellenleiter 11' teilweise von der Spiegelkopfgehäuseabdeckung 2 verdeckt. Eine Abdeckung des Beleuchtungsmoduls nach außen durch Teile der Spiegelkopfgehäuseabdeckung ist an verschiedenen Stellen sinnvoll. Im Bereich der Einkopplung an der Leiterplatte kann einen solche Abdeckung den Blick auf die Schaltung abschirmen.

Gerade im Bereich des Gelenkes des Spiegelkopfes mit einem kleinen Krümmungsradius ist die Spiegelkopfgehäuseabdeckung vorhanden. Licht wird für die Wamanzeige nur an der Auskoppelfläche 6 ausgekoppelt. Das Abdecken oder Nichtabdecken des Lichtwellenleiters bzw. Lichtfensters ist eine Frage des Designs des einzelnen Spiegels. Eine Abdeckung ist nur dann nur dann technisch sinnvoll, wenn wie in Beispiel von Figur 4 durch enge Radien Streustrahlungen der Lichtwellenleiter nicht zu vermeiden sind.

Die senkrecht zur Längenausdehnung der Lichtleiter 11, 11' eingesetzte Leiterplatte 13 dient gleichzeitig zur Abschattung der beiden Bereiche voneinander. Wird die LED 14 zur Beleuchtung des Blinkers aktiviert, leuchtet lediglich der Lichtleiterbereich 11 auf und die Abstrahlung erfolgt größtenteils über den Auskoppelpunkt 5.

Wird die Warnanzeige angesteuert wird die LED 14' aktiviert. Die Auskoppelfläche 6 der Warnanzeige wird beleuchtet.

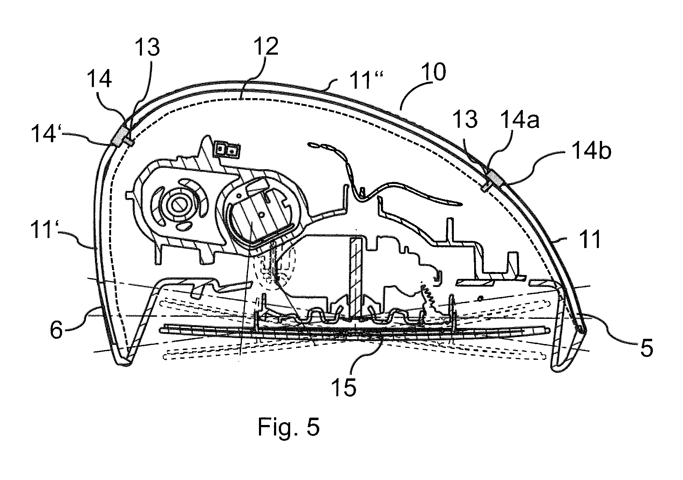

Figur 5 zeigt eine weitere Ausführungsform des erfindungsgemäßen Beleuchtungsmoduls 10. Hier ist der Querschnitt durch einen Türbrüstungsspiegel gezeigt. Türbrüstungsspiegel sind durch ihren halbkugeligen Schalenaufbau für die Erfindung sehr gut geeignet. Das Beleuchtungsmodul 10 weist in diesem Beispiel zwei Leiterplatten 13 mit zwei Einkoppelstellen und unterschiedlichen LEDs auf. An der linken Lichteinkoppelstelle sendet die LED 14' Licht für die Beleuchtung eines Warnhinweises aus. Die LED 14' kann dabei als farbige LED gestaltet sein, wenn eine amberfarbige oder rote Warnanzeige notwendig ist. Die LED 14 koppelt ihr Licht in den Lichtleiter 11" ein, ebenso die LED 14a, die sich an der zweiten Einkoppelstelle befindet. Der Lichtleiterbereich 11" zwischen den beiden Einkoppelstellen dient dem Design des Fahrzeugs und kann für eine beliebige Abstrahlung ausgelegt werden, da er keinen gesetzlichen Regelungen folgen muss. Die LED 14b koppelt Licht in den letzten Teilbereich 11 des Lichtleiters ein und muss mit der Auskoppelung an der Stelle 5 den gesetzlichen Vorgaben genügen.

Das Modulgehäuse 12 des Beleuchtungsmodule ist nur gestrichelt dargestellt. Es erstreckt sich entlang aller Lichtleiterabschnitte und umfasst alle Leiterplatten mit elektrischen Ansteuerungen. Das Beleuchtungsmodul kann direkt zwischen zwei Teilen der Spiegelkopfgehäuseabdeckung eingebaut werden.

Durch die Dreiteilung der lichtemittierenden Bereiche in diesem Ausführungsbeispiel ist die Aufnahme einer weiteren Funktion in das Beleuchtungsmodul möglich. Der Bereich des Lichtfensters 11' bleibt für einen Warnanzeige, da der Bereich für den Fahrer gut sichtbar ist, der Bereich 11 bleibt für die Blinkerfunktion reserviert. Der mittlere Bereich aber kann getrennt angesteuert werden und dadurch eine Positionsleuchte darstellen. Es ist auch denkbar, dass dieser Bereich mit weißen LEDs ausgeleuchtet wird und eine Umfeldleuchte ergibt.

Der mittlere Bereich der Beleuchtungseinheit kann zudem als Tagfahrlicht gestaltet sein.

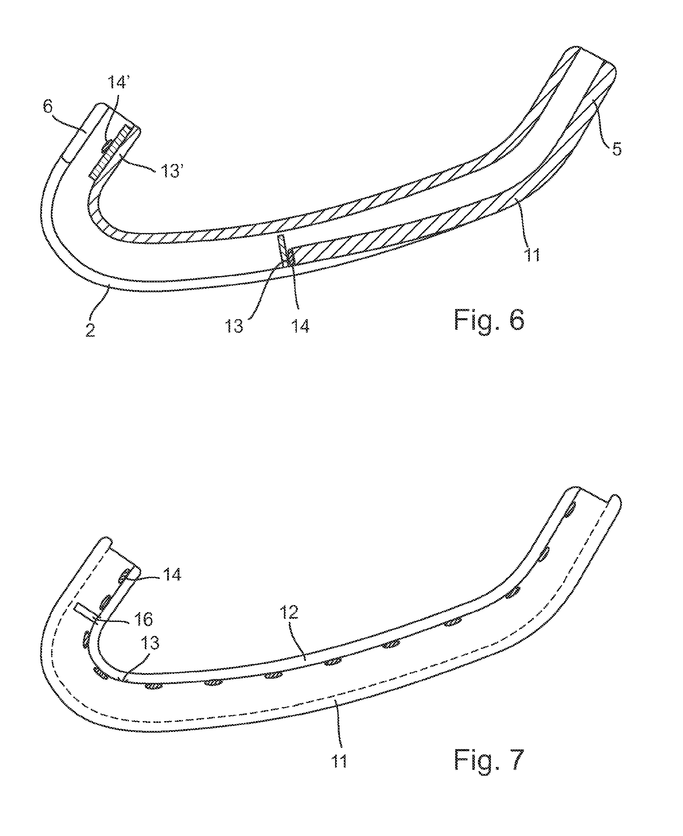

Figur 6 und Figur 7 zeigen zwei weitere Ausführungsformen des Beleuchtungsmoduls, die eine Hybridlösung mit Lichtleiter 11 und einer direkten Licht- Abstrahlung durch ein Lichtfenster vorstellen, sowie eine Lösung ohne Lichtleiter.

Die erfindungsgemäße Lösung nach Figur 6 weist ebenfalls eine Zweiteilung auf. Über eine Leiterplatte 13 wird die Beleuchtungseinheit in zwei Bereiche unterteilt. Der erste Bereich mit dem Lichtwellenleiter 11 dient als Blinker und koppelt Licht über die Auskoppelstelle 5 aus. Das Licht wird über eine LED, die an einer Leiterplatte 13 befestigt ist, eingekoppelt. Allerdings sind auch andere Einkoppelmöglichkeiten wie die Einkoppelung über Aussparungen im Lichtwellenleiter möglich. Im zweiten Bereich der Beleuchtungseinheit ist eine zweite Leiterplatte 13' montiert. Auf dieser Leiterplatte befindet sich ein geeignetes Leuchtmittel, im Allgemeinen mindestens eine weitere LED 14'. Das Licht der LED 14' wird über die Auskoppelfläche 6 der Warnanzeige ausgekoppelt.

In Figur 7 wird ein Beispiel gezeigt, das ganz ohne Lichtwellenleiter auskommt. Eine gekrümmte starre oder flexible Leiterplatte wird im Modulgehäuse 12 der Beleuchtungseinheit 10 installiert. Auf der Leiterplatte wird eine Vielzahl von LEDs montiert. Diese LEDs sind entweder über den gesamten Bereich der Beleuchtungseinheit regelmäßig angeordnet oder werden speziell in auszuleuchtenden Bereichen dichter angeordnet. Das Modulgehäuse 12 der Beleuchtungseinheit 10 wird von einer Lichtscheibe 11 abgedeckt. Es ist weiterhin möglich Reflektormittel einzubauen, um das Licht der LEDs in geeigneter Weise abzubilden. Es ist weiterhin möglich, um die beiden Bereiche der Beleuchtungseinheit zu trennen, ein Abschattungsmittel 16 zu installierten, so dass das Licht der Warnanzeige nicht in den Bereich des Blinkers einstreut und umgekehrt. Für die einzelnen Ausführungsformen der Bereiche mit Kombinationen aus Gehäuserückwand, Reflektormitteln, Beleuchtungsmitteln, Lichtwellenleitern und Lichtscheiben stehen dem Fachmann die unterschiedlichsten Ausführungsformen zur Realisierung der Erfindung zu Verfügung. Dabei ist auf die US 7,255,464 zu verweisen, die eine Vielzahl von Ausführungsformen diskutiert. Allerdings wird in dieser Druckschrift keine funktionale Kombination zweier Beleuchtungseinheiten beschrieben. Auch wird in dieser Druckschrift kein Abstrahlen vom Licht einer Warnanzeige fahrzeugseitig im Spiegelgehäuse beschrieben.

Der durchgängige Aufbau des Beleuchtungselements 10 stellt eine Herausforderung an die Bautiefe dar. Ein moderner Außenspiegel ist in seinem Volumen eingeschränkt. Große Bautiefen des Beleuchtungsmoduls sind vor allem in der Nähe der gelenkigen Anbindung des Spiegelkopfes an den Spiegelfuß sowie an der äußersten Spitze des Außenspiegels nicht möglich.

Daher sind Lichtleiterlösungen bzw. Lösungen mit flexiblen Leiterbahnen bzw. vorgeformten Leiterplatten vorzuziehen.

### Legende:

- 1: Außenspiegel
- 2: Spiegelkopf
- 3: Spiegelfuß
- 4: Öffnung für Spiegelglas
- 5: Auskoppelbereich Blinker
- 6: Auskoppelfläche Warnanzeige
- 7: Warnanzeigemodul
- 8: Innere Gehäuseabdeckung
- 9: Spiegelrahmen
- 10: Beleuchtungseinheit
- 11: Lichtfenster
- 12: Modulgehäuse
- 13: Leiterplatte
- 14: LEDs
- 15: Spiegelglas

## Patentansprüche

1. Außenspiegel (1) eines Fahrzeuges mit
einem Spiegelkopf (2),
einer den Spiegelkopf (2) abdeckenden Spiegelkopfgehäuseabdeckung,
einer unitären Beleuchtungseinheit (10) mit einem Modulgehäuse (12) und einer Lichtscheibe (11, 11', 11"), wobei
die Lichtscheibe (11, 11', 11")
sich entlang der Längsachse des Fahrzeugaußenspiegels (1) über dessen gesamte Außenkontur oder der Außenkontur folgend erstreckt,
das Modulgehäuse (12) mindestens zwei Beleuchtungsmittel (14, 14', 14a, 14b) montiert auf mindestens einer Leiterplatte (13, 13') enthält,
das Modulgehäuse (12) eine Vorrichtung zur Befestigung an der Spiegelkopfgehäuseabdeckung aufweist,
sich die Lichtscheibe (11, 11', 11") im Außenspiegel (1) mit dem den Spiegelkopf (2) abdeckenden Modulgehäuse (12) erstreckt,
die Beleuchtungseinheit (10) eine erste Funktion als Blinker ausführt und Licht in einem ersten Auskoppelbereich (5, 5') der Lichtscheibe (11, 11'), 11") auskoppelt,
**dadurch gekennzeichnet, dass**
die Beleuchtungseinheit (10) eine zweite Funktion als für einen Fahrer sichtbare Warnanzeige ausführt und mindestens einen zweiten Bereich (6, 6') des Fahrzeugaußenspiegels, der näher am Fahrzeug als der erste Auskoppelbereich (5, 5') liegt, ausleuchtet.

2. Außenspiegel nach Anspruch 1, **dadurch gekennzeichnet, dass**
die Lichtscheibe mit einem Lichtfenster (11) so angebracht ist, dass an deren äußerster Stelle das Licht für die Blinkerfunktion im ersten Auskoppelbereich (5) ausgekoppelt wird, während an der inneren fahrzeugseitigen Seite (8) der Spiegelkopfgehäuseabdeckung das Licht für die Warnanzeige durch den von der Lichtscheibe (11) bereitgestellten, zweiten Auskoppelbereich (6) zur Verfügung gestellt wird.

3. Außenspiegel nach Anspruch 1, **dadurch gekennzeichnet, dass**
die Lichtscheibe zwei Teilbereiche als Lichtfenster (11, 11') aufweist, die gleichzeitig als Lichtwellenleiter ausgebildet und in das Modulgehäuse (12) eingebaut sind,
wobei die Lichtwellenleiter (11, 11') auf eine Leiterplatte (13) zulaufen, so dass Licht, das eine LED (14) des Beleuchtungsmittels in Reaktion auf eine Blinkersteuerung emittiert, dem einen Lichtwellenleiter (11) bis zu dessen Auskoppelpunkt, der den ersten Auskoppelbereich (5) darstellt, folgt, während das Licht einer Warnanzeige über eine weitere LED (14') des Beleuchtungsmittels emittiert und über den anderen Lichtwellenleiter (11') bis zu dessen, einen zweiten Bereich (6) darstellenden Auskoppelfläche geleitet wird.

4. Außenspiegel nach Anspruch 1, **dadurch gekennzeichnet, dass**
das Modulgehäuse (12) sich entlang dreier Lichtleiterabschnitten (11, 11', 11") der Lichtscheibe erstreckt und zwei Leiterplatten (13) mit jeweils zwei Einkoppelstellen für Licht und elektrischen Ansteuerungen umfasst.

5. Außenspiegel nach Anspruch 1, **dadurch gekennzeichnet, dass**
das Modulgehäuse (12) von einem Lichtleiter als Lichtscheibe (11) verschlossen oder einem Lichtfenster als Lichtscheibe (11) abgedeckt ist, oder
das Modulgehäuse (12) mindestens einen Abschnitt eines Lichtleiters enthält.

6. Außenspiegel nach Anspruch 1, **dadurch gekennzeichnet, dass** der zweite Bereich (6) im fahrzeugseitigen Bereich (8) der Spiegelkopfgehäuseabdeckung des Fahrzeugaußenspiegels (1) liegt.

7. Außenspiegel nach Anspruch 1, **dadurch gekennzeichnet, dass** mindestens ein mittlerer Bereich (11") die Funktion einer Positionsleuchte oder einer Umfeldleuchte hat.

8. Außenspiegel nach Anspruch 1, **dadurch gekennzeichnet, dass** die Beleuchtungseinheit (10) sich von innen entlang der Spiegelkopfgehäuseabdeckung des Fahrzeugaußenspiegels erstreckt, wobei die Spiegelkopfgehäuseabdeckung entlang der gesamten Länge Ausnehmungen aufweist.

9. Außenspiegel nach Anspruch 1, **dadurch gekennzeichnet, dass** die Beleuchtungseinheit (10) sich von innen entlang der Spiegelkopfgehäuseabdeckung des Fahrzeugaußenspiegels erstreckt, wobei die Spiegelkopfgehäuseabdeckung mindestens einen Bereich der Beleuchtungseinheit überdeckt.

10. Außenspiegel nach Anspruch 1, **dadurch gekennzeichnet, dass** die Beleuchtungseinheit (10) zwischen den Bereichen (5, 6) Abschattungsmittel (16) aufweist.

11. Außenspiegel nach Anspruch 1 und 10, **dadurch gekennzeichnet, dass** die Beleuchtungseinheit (10) zwischen den Bereichen (5, 6) Leiterplatten (13) als Abschattungsmittel aufweist.

## Claims

1. An external mirror (1) of a vehicle having
a mirror body (2),
a mirror body housing cover which covers the mirror body (2),
a unitary lighting unit (10) having a modular housing (12) and a lens (11, 11', 11"), wherein
the lens (11, 11', 11") extends along the longitudinal axis of the vehicle external mirror (1) over the latter's entire outer contour or following the outer contour,
the modular housing (12) contains at least two lighting means (14, 14', 14a, 14b) mounted on at least one printed circuit board (13, 13'),
the modular housing (12) comprises a device for fixing to the mirror body housing cover,
the lens (11, 11', 11") extends in the external mirror (1) with the modular housing (12) which covers the mirror body (2), the lighting unit (10) performs a first function as a turn signal and uncouples light in a first uncoupling area (5, 5') of the lens (11, 11', 11 "),
**characterized in that**
the lighting unit (10) performs a second function as a visible warning display for a driver and illuminates at least a second area (6, 6') of the vehicle external mirror which is closer to the vehicle than the first uncoupling area (5, 5').

2. The external mirror according to Claim 1, **characterized in that** the lens is mounted with a light window (11) such that at the lens's outermost position, the light is decoupled for the turn signal function in the first uncoupling area (5), while on the inner side (8) of the mirror body housing cover, on the vehicle side, the light for the warning display is provided by the second uncoupling area (6) provided by the lens (11).

3. The external mirror according to Claim 1, **characterized in that**
the lens comprises two partial areas as light windows (11, 11'), which are simultaneously configured as fiber-optic cables and are incorporated into the modular housing (12),
wherein the fiber-optic cables (11, 11') run up to a printed circuit board (13) so that light which is emitted by a LED (14) of the lighting means in response to a turn signal control follows the one fiber-optic cable (11) up to the latter's uncoupling point, which constitutes the first uncoupling area (5), while the light of a warning display is emitted by means of a further LED (14') of the lighting means and conducted by means of the other fiber-optic cable (11') up to the latter's uncoupling surface which constitutes a second area (6).

4. The external mirror according to Claim 1, **characterized in that** the modular housing (12) extends along three optical fiber sections (11, 11', 11 ") of the lens and comprises two printed circuit boards (13) each having two coupling points for light and electrical control systems.

5. The external mirror according to Claim 1, **characterized in that** the modular housing (12) is sealed by an optical fiber as a lens (11) or is covered by a light window as a lens (11), or the modular housing (12) contains at least a portion of an optical fiber.

6. The external mirror according to Claim 1, **characterized in that** the second area (6) is located in the area (8) of the mirror body housing cover of the vehicle external mirror (1) on the vehicle side.

7. The external mirror according to Claim 1, **characterized in that** at least a central area (11 ") has the function of a position light or a perimeter light.

8. The external mirror according to Claim 1, **characterized in that** the lighting unit (10) extends from the inside along the mirror body housing cover of the vehicle external mirror, wherein the mirror body housing cover comprises recesses along the entire length.

9. The external mirror according to Claim 1, **characterized in that** the lighting unit (10) extends from the inside along the mirror body housing cover of the vehicle external mirror, wherein the mirror body housing cover covers at least a section of the lighting unit.

10. The external mirror according to Claim 1, **characterized in that** the lighting unit (10) comprises shadowing means (16) between the areas (5, 6).

11. The external mirror according to Claim 1 und 10, **characterized in that** the lighting unit (10) comprises printed circuit boards (13) as shadowing means between the areas (5, 6).

## Revendications

1. Rétroviseur extérieur (1) d'un véhicule automobile, comportant
une tête de rétroviseur (2),
un recouvrement de boîtier de tête de rétroviseur recouvrant la tête de rétroviseur (2),
une unité d'éclairage (10) en un seul bloc comporte un boîtier de module (12) et un disque de lumière (11, 11', 11 "), dans lequel
le disque de lumière (11, 11', 11") s'étend le long de l'axe longitudinal du rétroviseur extérieur d'automobile (1) sur le même contour extérieur que celui-ci, ou suit le contour extérieur,
le boîtier de module (12) contient au moins deux moyens d'éclairage (14, 14', 14a, 14b) montés sur au moins une carte de circuits imprimés (13, 13'),
le boîtier de module (12) comporte un dispositif pour une fixation sur le recouvrement de boîtier de tête de rétroviseur,
le disque de lumière (11, 11', 11 ") s'étend dans le rétroviseur extérieur (1) en ayant le boîtier de module (12) recouvrant la tête de rétroviseur (2),
l'unité d'éclairage (10) remplit une première fonction de clignotant, et découple la lumière dans une première zone de découplage (5, 5') du disque de lumière (11, 11', 11"),
**caractérisé en ce que**
l'unité d'éclairage (10) remplit une seconde fonction d'avertisseur de sécurité pour le conducteur, et éclaire au moins une seconde zone (6, 6') du rétroviseur extérieur de véhicule automobile, qui est située plus proche du conducteur que la première zone de découplage (5, 5').

2. Rétroviseur extérieur selon la revendication 1, **caractérisé en ce que** le disque de lumière est installé avec une fenêtre de lumière (11) qui, dans sa position la plus à l'extérieur, va découpler la lumière pour la fonction de clignotant dans une première zone de découplage (5), pendant que dans la face intérieure côté conducteur (8) du recouvrement de boîtier de tête rétroviseur, la lumière va être fournie pour la fonction d'avertisseur de sécurité à travers la seconde zone de découplage (6) prévue dans le disque de lumière (11), pour être rendue disponible.

3. Rétroviseur extérieur selon la revendication 1, **caractérisée en ce que** le disque de lumière présente deux zones partielles en tant que fenêtre de lumière (11, 11'), qui sont réalisées en même temps sous la forme de fibres optiques, et qui sont installées dans le boîtier de module (12),
dans lequel les fibres optiques (11, 11') vont jusque sur la carte de circuits imprimés (13), de sorte que de la lumière, qu'une LED (14) des moyens d'éclairage émet en réaction à une commande de clignotement, suit une fibre optique (11) jusqu'à son point de découplage, que représente la première zone de découplage (5), pendant que la lumière d'un avertisseur, émise par une autre LED (14') des moyens d'éclairage, et au moyen de l'autre fibre optique, va éclairer jusqu'à la surface de découplage représentée par une seconde zone (6).

4. Rétroviseur extérieur selon la revendication 1, **caractérisé en ce que** le boîtier de module (12) s'étend le long de trois parties d'éclairage (11, 11', 11 ") du réflecteur de lumière, et comporte deux cartes de circuits imprimés (13) ayant chacune deux positions de couplage pour de la lumière, et des commandes électriques.

5. Rétroviseur extérieur selon la revendication 1, **caractérisé en ce que** le module de boîtier (12) est fermé vis-à-vis d'une fibre optique en tant que disque de lumière (11), ou recouvre une fenêtre de lumière en tant que réflecteur de lumière (11), ou le boîtier de module (12) contient au moins une partie d'une fibre optique.

6. Rétroviseur extérieur selon la revendication 1, **caractérisé en ce que** la deuxième zone (6) est située dans la zone côté conducteur (8) du recouvrement de boîtier de tête de rétroviseur du rétroviseur extérieur de véhicule automobile (1).

7. Rétroviseur extérieur selon la revendication 1, **caractérisé en ce qu'**au moins une zone médiane (11 ") remplit la fonction de feux de position ou de feux d'environnement.

8. Rétroviseur extérieur selon la revendication 1, **caractérisé en ce que** l'unité d'éclairage (10) s'étend depuis l'intérieur le long du recouvrement de boîtier de tête de rétroviseur du rétroviseur extérieur de véhicule automobile, le recouvrement de boîtier de tête rétroviseur présentant des évidements le long de ladite longueur.

9. Rétroviseur extérieur selon la revendication 1, **caractérisé en ce que** l'unité d'éclairage (10) s'étend depuis l'intérieur le long du recouvrement de boîtier de tête de véhicule du rétroviseur extérieur de véhicule automobile, dans lequel le recouvrement de boîtier de tête de rétroviseur recouvre au moins une zone de l'unité d'éclairage.

10. Rétroviseur extérieur selon la revendication 1, **caractérisé en ce que** l'unité d'éclairage (10) présente des moyens de masquage (16) entre les zones (5, 6).

11. Rétroviseur extérieur selon les revendications 1 et 10, **caractérisé en ce que** l'unité d'éclairage (10) comporte des cartes de circuits imprimés (13) en tant que moyens de masquage entre les zones (5, 6).
